(19) Europäisches Patentamt
European Patent Office
Office européen des brevets

(11) **EP 3 028 874 B1**

(12) **EUROPEAN PATENT SPECIFICATION**

(45) Date of publication and mention of the grant of the patent:
**08.03.2017 Bulletin 2017/10**

(51) Int Cl.:
**B60C 11/03** *(2006.01)* **B60C 11/11** *(2006.01)*

(21) Application number: **15196343.6**

(22) Date of filing: **25.11.2015**

(54) **MOTORCYCLE TIRE**

MOTORRADREIFEN

PNEU DE MOTO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2014 JP 2014247498**

(43) Date of publication of application:
**08.06.2016 Bulletin 2016/23**

(73) Proprietor: **Sumitomo Rubber Industries, Ltd.**
**Hyogo-ken (JP)**

(72) Inventor: **MIYAJI, Daiki**
**Kobe-shi, Hyogo 651-0072 (JP)**

(74) Representative: **Manitz, Finsterwald & Partner GbR**
**Martin-Greif-Strasse 1**
**80336 München (DE)**

(56) References cited:
**EP-A1- 1 473 176    JP-A- 2008 168 703**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a motorcycle tire capable of satisfying both of high-speed wet performance and handling performance.

### Background Art

Motorcycle tires provided in the tread portion with grooves have been proposed. During running in wet conditions, the grooves disposed in the tread portion evacuate water existing between the tread portion and road surface outwardly of the tire to improve high-speed wet performance.

The following patent document 1 proposes a motorcycle tire improved in the arrangement of circumferential grooves, inclined lateral grooves and sub lateral grooves. Thus, the motorcycle tire is improved in the handling stability during cornering in wet conditions, while improving drainage, a kind of wet performance.

[Prior art document]

[Patent document]

[Patent document 1] Japanese Patent Application
Publication No. JP2008-168703A

### Summary of the Invention

### Problems to be resolved by the Invention

For improving a motorcycle tire in transient handling performance during cornering, it is important that the amount of deformation of blocks disposed in the tread portion keeps substantially constant value even if the load applied to the tread portion is changed.

For example, when a motorcycle is fully leant and the camber angle of the tire becomes large, the load applied to the tread portion is decreased.
In such a situation, therefore, it is desirable that the rigidity of the blocks becomes smaller toward a tread edge in order to make it possible to keep a substantially constant amount of deformation.

In the motorcycle tire disclosed in the patent document 1, the widths of the inclined lateral grooves are constant along the lengths, and the blocks formed between the inclined lateral grooves and the sub lateral grooves have rigidity constant in the tire axial direction. Therefore, the rigidity of each block does not correspond to the decrease or increase of the load applied to the tread portion resulting from the decrease or increase of the camber angle. Thus, the transient handling performance has room for improvement.

The present invention was made with the view toward the above-mentioned actual circumstances, and an object of the present invention is to provide a motorcycle tire which satisfy both of wet performance and handling performance by improving the arrangement of grooves disposed in the tread portion.

** Means of solving the Problems

According to the present invention, a motorcycle tire comprises a tread portion provided with at least one circumferential groove disposed in a tread crown region and extending continuously in the tire circumferential direction, and lateral grooves extending from the at least one circumferential groove to the tread edges, wherein
the width of each of the lateral grooves is larger at its axially outer end positioned at the tread edge than at its axially inner end connected to the circumferential groove.

In the motorcycle tire according to the present invention, it is preferable that the at least one circumferential groove is a pair of the circumferential grooves disposed one on each side of the tire equator, and a circumferentially continuous center rib is formed therebetween.

In the motorcycle tire according to the present invention, it is preferable that the axially outer end of each of the lateral grooves is opened at a tire sidewall portion extending radially inwardly from the tread edge.

In the motorcycle tire according to the present invention, it is preferable that the lateral grooves are the only grooves disposed in the tread portion and extending in the tire axial direction.

In the motorcycle tire according to the present invention, it is preferable that the circumferential groove and the lateral grooves each extend straight.

In the motorcycle tire according to the present invention, it is preferable that the lateral grooves each extend at an angle of not more than 5 degrees with respect to the tire axial direction.

In the motorcycle tire according to the present invention, it is preferable that the width of the lateral grooves is gradually increased from the at least one circumferential groove toward the tread edges.

In the motorcycle tire according to the present invention, it is preferable that the tread portion comprises axially long blocks each formed between circumferentially adjacent two of the lateral grooves, and

the blocks and the lateral grooves satisfy the following condition (1),

$$1.0 < ShR < CrR < 3.0 \quad --- \quad (1)$$

wherein

CrR is the ratio Wa/WA of a circumferential dimension Wa of the block measured at its axially inner end and the width WA of the lateral groove measured at its axially inner end, and

ShR is the ratio Wb/WB of a circumferential dimension wb of the block measured at its axially outer end at the tread edge and the width WB of the lateral groove measured at its axially outer end.

In the motorcycle tire according to the present invention, it is preferable that arrangement pitches in the tire circumferential direction of the lateral grooves are 2.5 to 3.5 times the groove width WA of the lateral groove measured at its axially inner end.

In the motorcycle tire according to the present invention, it is preferable that the tread portion comprises a tread rubber, and the thickness of the tread rubber is maximum at the tread edges.

In the motorcycle tire according to the present invention, it is preferable that the tread portion comprises a tread rubber, and the complex elastic modulus E* of the tread rubber is 1.0 to 10.0 MPa.

**Effects of the Invention**

The tread portion of the motorcycle tire according to the present invention is provided with at least one circumferential groove disposed in the tread crown region and extending continuously in the tire circumferential direction, and a plurality of lateral grooves extending from the at least one circumferential groove to the tread edges.

Since the inner end of each of the lateral grooves is connected to the circumferential groove, the lateral grooves are excellent at the drainage during straight running, and the wet performance is improved.

Further, since the outer end of each of the lateral grooves is positioned at the tread edge, the lateral grooves are excellent at the drainage during cornering, and the wet performance is improved.

Since the groove width at the outer end is more than the groove width at the inner end in each of the lateral grooves, the rigidity of the blocks formed between the lateral grooves becomes relatively small near the outer ends. Accordingly, under such a ground contacting state that the camber angle becomes increased as the motorcycle is fully leant, if the load applied to the tread portion is decreased, as the blocks control the variation of the amount of deformation, the transient handling performance can be improved.

As explained above, the motorcycle tire according to the present invention can satisfy both of the high-speed wet performance and the handling performance,

especially, the transient property during cornering.

**Brief Description of the Drawings**

Fig. 1 is a cross sectional view of a motorcycle tire as an embodiment of the present invention.

Fig. 2 is a developed partial view of the tread portion of the tire in Fig. 1 showing a tread pattern.

Fig. 3 is a closeup of the tread portion shown in Fig. 2.

**Mode for carrying out the Invention**

Embodiments of the present invention will now be described in detail in conjunction with the accompanying drawings.

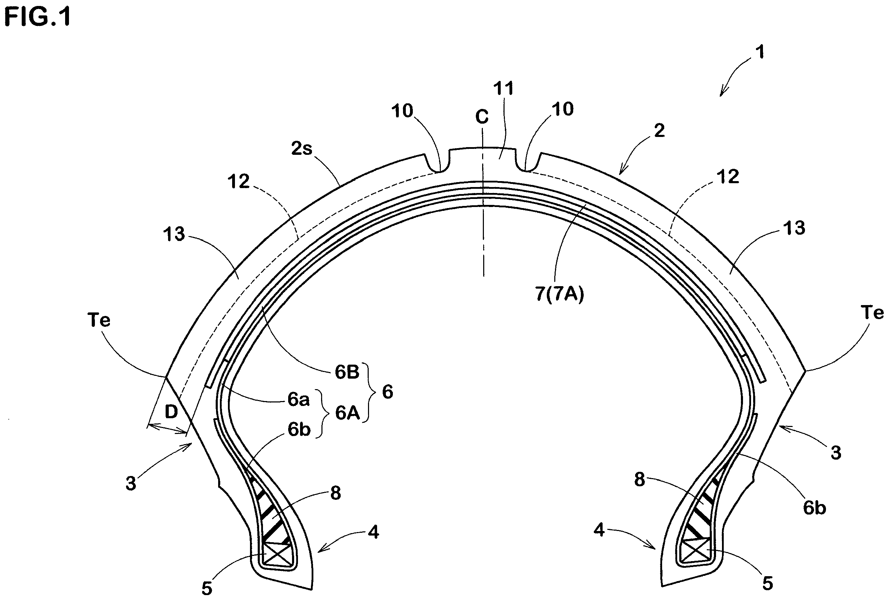

In Fig. 1, there is shown a cross sectional view of a motorcycle tire as a preferred embodiment of the present invention suitable for running on paved roads such as of wet circuit, which is taken along a tire meridian plane including the tire rotational axis under a normal state of the tire.

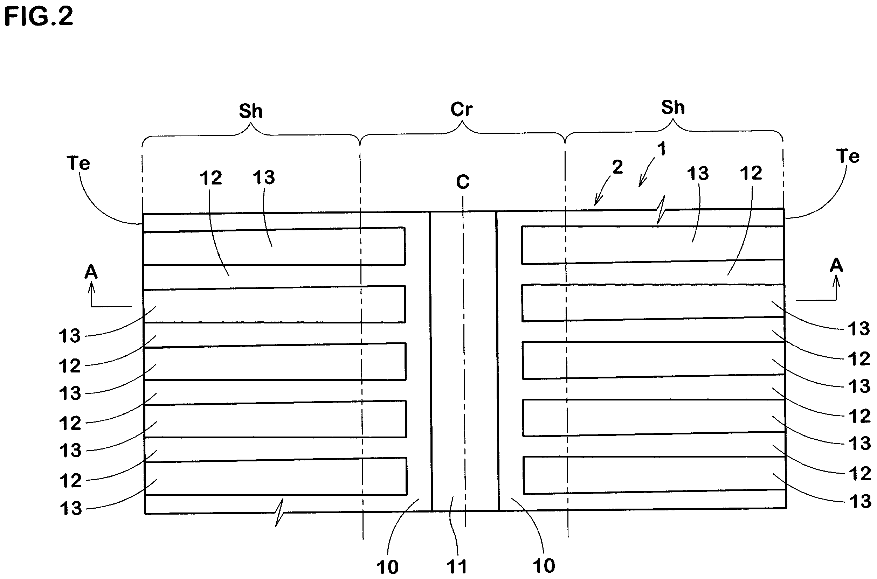

Fig. 2 is a developed plan view of a part of the tread portion 2 of the tire 1 showing a tread pattern.

The cross sectional view shown in Fig. 1 corresponds to that taken along line A-A of Fig. 2.

The "normal state" is such a state that the tire 1 is mounted on a standard wheel rim (not shown), inflated to a normal inner pressure, and loaded with no tire load. In this specification, dimensions of various portions of the tire 1 refer to values measured under the normal state unless otherwise noted.

The "standard wheel rim" is a wheel rim specified for the tire by a standard included in a standardization system on which the tire is based, for example, the "normal wheel rim" in JATMA, "Design Rim" in TRA, and "Measuring Rim" in ETRTO.

The "normal inner pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

In the tire 1 in this embodiment, the ground contacting surface 2s which is the outer surface of the tread portion 2 between the tread edges Te is curved convexly to the outside in the tire radial direction. Such tire 1 can have a sufficient ground contacting area during cornering with a large camber angle.

The tire 1 in this embodiment has a carcass 6 and a band 7 disposed outside the carcass 6 in the tread portion 2.

For example, the carcass 6 is composed of two carcass plies 6A. The two carcass plies 6A and 6B are laid one upon the other so that the carcass cords of one carcass ply cross those of the other carcass ply. For example, the carcass cords are inclined at an angle of 75 to 90 degrees with respect to the tire equator C.

For example, organic fiber cords, e.g. nylon, polyester, rayon and the like are suitably used as the carcass cords.

For example, the carcass ply 6A comprises a main portion 6a and turnup portions 6b.

The main portion 6a extends from the tread portion 2 through both sidewall portions 3 to bead cores 5 disposed in both bead portions 4.

The turnup portions 6b continue from the main portion 6a and are turned up around the bead cores 5 from the inside to the outside in the tire axial direction.

Between the main portion 6a and the turnup portion 6b, a bead apex rubber 8 is disposed. The bead apex rubber 8 is made of hard rubber, and extends radially inwardly from the bead core 5.

The band 7 is, for example, composed of a band ply 7A. The band ply 7A is formed as the so-called full-width band ply extending over the substantially entire width of the tread portion 2. Such band ply 7A binds the entire width of the tread portion 2, and helps to improve the cornering performance and the high speed stability. In the band ply 7A, a band cord is arranged at an angle of not more than 5 degrees with respect to the tire circumferential direction.

As the band cord, for example, organic fiber cords, e.g. aramid, rayon and the like can be suitably used.

The tread portion 2 comprises a tread crown region Cr and shoulder regions Sh as shown in Fig. 2.

The tread crown region Cr is a straight running ground contacting region when the tire 1 under the normal state is contacted with the ground at a camber angle of 0 degree and loaded with the standard load. And its center in the tire axial direction coincides with the tire equator C.

The shoulder regions Sh are regions axially outside the tread crown region Cr.

The "standard load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread portion 2 is provided with at least one circumferential groove 10 disposed in the tread crown region Cr and extending continuously in the tire circumferential direction. In this embodiment, the at least one circumferential groove 10 is a pair of circumferential grooves 10 disposed one on each side of the tire equator C.

The circumferential grooves 10 in this embodiment extend straight in the tire circumferential direction.

Between the paired circumferential grooves 10, there is formed a center rib 11 continuous in the tire circumferential direction. The center rib 11 is not provided with any void such as grooves and sipes. Thereby, during straight running, a sufficient ground contacting area can be secured, and it is possible to improve the straight running stability.

The tread portion 2 is further provided with a plurality of lateral grooves 12 extending from the at least one circumferential groove 10 to both of the tread edges Te, and axially long blocks 13 each formed between circumferentially adjacent two of the lateral grooves 12.

In the tread portion 2 in this embodiment, the lateral grooves 12 are the only grooves extending in the tire axial direction, and the tread portion 2 is not provided with lateral grooves whose axially inner ends are not connected to the circumferential groove 10.

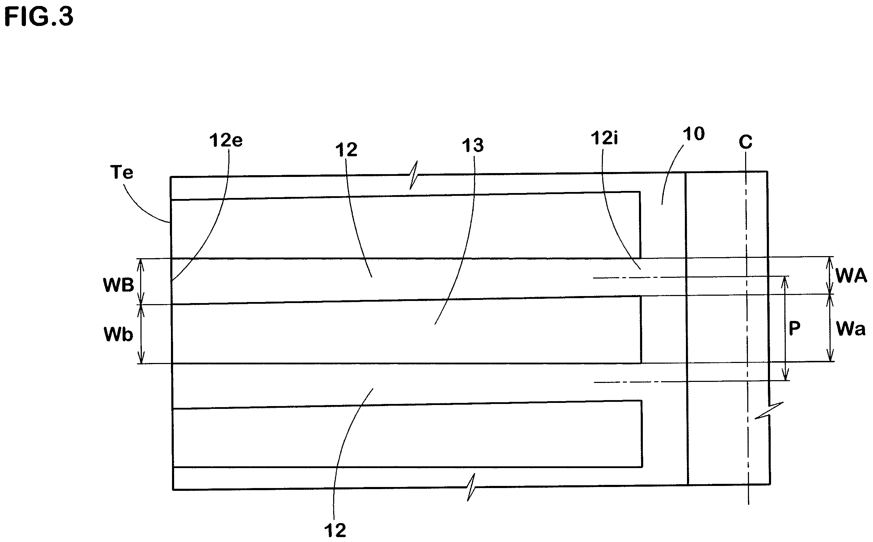

Namely, grooves extending in the tire axial direction in this embodiment are the lateral grooves 12 whose inner ends 12i (shown in Fig. 3) are opened to the circumferential groove 10, therefore, this embodiment excels at drainage during straight running, and exerts good wet performance.

Further, since the outer ends 12e (shown in Fig. 3) of all of the lateral grooves 12 are positioned at the tread edges Te, this embodiment excels at drainage during cornering, therefore, the wet performance is further improved.

In this embodiment, each of the lateral grooves 12 is opened at the sidewall portion 3 (shown in Fig. 1) continued from the tread edge Te. Therefore, this embodiment excels at drainage during cornering, and the wet performance is further improved.

In this embodiment, each of the lateral grooves 12 extends straight in the tire axial direction. Preferably, each of the lateral grooves 12 extends at an angle of not more than 5 degrees with respect to the tire axial direction. More preferably, each of the lateral grooves 12 is extends parallel with the tire axial direction. That is to say, it is preferable that each of the lateral grooves 12 intersects with the circumferential groove 10 at substantially 90 degrees.

By the nature of things, it is much more common to arrange the lateral grooves 12 along the direction of force in order for drainage.

But, the direction of the resultant force of a driving force and a lateral force differs considerably from the direction of the resultant force of a braking force and a lateral force. In this embodiment, since each of the lateral grooves 12 has an angle of not more than 5 degrees with respect to the tire axial direction, it is possible to satisfy both of drainage during driving and drainage during braking.

Thereby, the tire 1 in this embodiment can exert further improved wet performance.

In Fig. 3, there is shown an enlarged developed plan view of the tread portion 2.

As shown in Fig. 3, in each of the lateral grooves 12, the groove width WB at the outer end 12e is more than the groove width WA at the inner end 12i. Therefore, the rigidity of the block 13 is such that the rigidity in the vicinity of the outer end 12e of the lateral grooves 12 becomes less than the rigidity in the vicinity of the inner end 12i of the lateral grooves 12. In a ground contacting state in which the camber angle is large such as a fully leant state of te motorcycle, the load applied to the tread portion 2 decreases, and the rigidity of the blocks 13 is also decreased near the outer ends 12e of the lateral grooves 12. Accordingly, the transient handling performance during cornering is improved.

In this embodiment, the groove width of each lateral groove 12 is gradually increased from the circumferential groove 10 toward the tread edge Te. Therefore, the rigidity of the blocks 13 are gradually decreased toward the axially outside. Accordingly, the blocks 13 are provided with rigidity more suited for the decrease or increase of the load applied to the tread portion resulting from the decrease or increase of the camber angle, therefore, the transient handling performance is further improved.

It is preferable that the blocks 13 and the lateral grooves 12 satisfy the following condition (1),

$$1.0 < ShR < CrR < 3.0 \quad ----- \quad (1)$$

wherein

CrR is the ratio Wa/WA of a circumferential dimension Wa of the block 13 at the circumferential groove 10 and to the groove width WA of the lateral grooves 12 at the inner end 12i, and
ShR is the ratio Wb/WB of a circumferential dimension wb of the block 13 at the tread edge Te to the groove width WB of the lateral grooves 12 at the outer end 12e.

By defining the ratio of the circumferential dimensions of the blocks 13 and lateral grooves 12, the transient handling performance is improved.

If the ShR becomes less than 1.0, the circumferential dimension wb of the block 13 is decreases in the shoulder region Sh, the rigidity of the block 13 becomes insufficient, and the blocks 13 can not fully support the load applied to the tread portion 2. As a result, there is a possibility that the transient handling performance is deteriorated.

If the CrR becomes not less than 3.0, the circumferential dimension Wa of the block 13 is increased in the tread crown region Cr, the rigidity of the block 13 are excessively increased, and the blocks 13 become hard to be bent by the load applied to the tread portion 2. As a result, there is a possibility that the transient handling performance is deteriorated.

It is preferable that the groove width of the lateral grooves 12 is in a range of 2.5 to 8.0 mm.

If the groove width of the lateral grooves 12 is less than 2.5 mm, the lateral grooves 12 are closed by the load applied to the tread portion 2, and there is a possibility that drainage or wet performance is deteriorated.

If the groove width of the lateral grooves 12 becomes more than 8.0 mm, the circumferential dimension of the block 13 defined by the condition (1) becomes increased, and the rigidity of the block 13 is also increased. As a result, the blocks 13 become hard to be flexed by the load applied to the tread portion 2, and there is a possibility that the transient handling performance is deteriorated.

It is preferable that the arrangement pitches P in the tire circumferential direction of the lateral grooves 12 are set in a range of from 2.5 to 3.5 times the groove width WA of the lateral groove 12 at the inner end 12i. By defining the arrangement pitches P of the lateral grooves 12 in the tire circumferential direction, drainage or wet performance is further improved, while maintaining good transient handling performance.

The tread portion 2 includes a tread rubber. In this embodiment, as shown in Fig. 1, the thickness D of the tread rubber becomes maximum at the tread edges Te. Therefore, near the tread edges T, the rigidity is improved, and it becomes possible to satisfy both of the transient handling performance and the drainage or wet performance.

Further, it is preferable that the tread rubber has a complex elastic modulus E* of from 1.0 to 10.0 MPa. In particular, by defining such rubber physical property as above, the rigidity is secured near the tread edges T, and it becomes possible to satisfy both of the transient handling performance and the drainage or wet performance.

Here, the complex elastic modulus E* is measured according to JIS-K6394 under the following conditions by the use of a viscoelastic spectrometer manufactured by Iwamoto Seisakusyo KK.

initial strain: 10 %
amplitude: +/-2 %
frequency: 10 Hz
deformation mode: tensile
temperature: 30 deg.C

While detailed description has been made of one preferable embodiment of the present invention, the illustrated embodiment should not be construed as to limit the scope of the present invention; the present invention may be embodied in various forms.

**working examples**

Motorcycle tires having the basic structure shown in Fig. 1 and the tread pattern shown in Fig. 2 were experimentally manufactured based on specifications listed in Table 1.

The tires were each mounted on the front wheel of a motorcycle, and wet performance and handling performance were evaluated on an asphalt surface of a circuit course. As to the wet performance, drainage during straight running and drainage during cornering were evaluated. As to the handling performance, its transient property was evaluated.

Common specifications of the tires and test methods are as follows.

Test vehicle: Sport bike, Engine displacement 1000 cc,
Front tire size: 120/70R17
Front tire pressure: 250 kPa

< Drainage >

With the above-mentioned test vehicle running around the circuit course, the test rider evaluated drainage based on the handling stability during straight running and that during cornering. The results are indicated by a rating based on Comparative example 1 being 100. The larger value is better.

< Transient property >

With the above-mentioned test vehicle running around the circuit course, the test rider evaluated the transient handling performance based on smoothness of the change in the ground contact feeling of the test vehicle when the camber angle is changed by the test rider. The results are indicated by a rating based on Comparative example 1 being 100. The larger value is better.

The test results are shown in Table 1.

Table 1

|  | Ref. | Ex.1 | Ex.2 |
|---|---|---|---|
| lateral grooves opened at sidewall portion or not | no | yes | yes |
| angle between lateral grooves and circumferential groove (deg.) | 0-90 | 90 | 45 |
| ChR | 1.0 | 1.9 | 1.9 |

(continued)

| | Ref. | Ex.1 | Ex.2 |
|---|---|---|---|
| ShR | 1.0 | 1.45 | 1.45 |
| wet performance-drainage (rating) | 100 | 120 | 120 |
| handling performance-transient property (rating) | 100 | 120 | 100 |

From the test results, it was confirmed that, in comparison with Comparative example, working examples 1 and 2 were improved in the transient property, and the handling performance was improved. Further, it was confirmed that working example 1 whose angle between the circumferential groove and the lateral grooves was 90 degrees was improved in the drainage, and the wet performance was improved.

**Reference Signs List**

2    tread portion
3    sidewall portion
10   circumferential groove
12   lateral grooves
13   block
C    tire equator

**Claims**

1.  A motorcycle tire (1) comprising a tread portion (2) provided with at least one circumferential groove (10) disposed in a tread crown region (Cr) and extending continuously in the tire circumferential direction, and lateral grooves (12) extending from said at least one circumferential groove (10) to the tread edges (Te), wherein
    the width of each said lateral groove (12) is such that a width (WB) at the axially outer end (12e) positioned at the tread edge (Te) is more than a width (WA) at the axially inner end (12i) connected to the circumferential groove (10).

2.  The motorcycle tire according to claim 1, wherein said at least one circumferential groove (10) is a pair of the circumferential grooves (10) disposed one on each side of the tire equator (C), and a circumferentially continuous center rib (11) is formed therebetween.

3.  The motorcycle tire according to claim 1 or 2, wherein the axially outer end (12e) of each said lateral groove (12) is opened at a tire sidewall portion (3) extending radially inwardly from the tread edge (Te).

4.  The motorcycle tire according to any one of claims 1-3, wherein the lateral grooves (12) are the only grooves disposed in the tread portion (2) and extending in the tire axial direction.

5.  The motorcycle tire according to any one of claims 1-4, wherein said at least one circumferential groove (10) and the lateral grooves (12) each extend straight.

6.  The motorcycle tire according to claim 5, wherein the lateral grooves (12) each extend at an angle of not more than 5 degrees with respect to the tire axial direction.

7.  The motorcycle tire according to any one of claims 1-6, wherein the width of the lateral grooves (12) is gradually increased from said at least one circumferential groove (10) toward the tread edges (Te).

8.  The motorcycle tire according to any one of claims 1-7, wherein the tread portion (2) comprises axially long blocks (13) each formed between circumferentially adjacent two of the lateral grooves (12), and
    the blocks (13) and the lateral grooves (12) satisfy the following condition (1),

$$1.0 < ShR < CrR < 3.0 \quad \text{---} \quad (1)$$

wherein

CrR is the ratio Wa/WA of a circumferential dimension (Wa) of the block (13) measured at its axially inner end and the width (WA) of the lateral groove (12) measured at its axially inner end (12i), and
ShR is the ratio Wb/WB of a circumferential dimension (wb) of the block (13) measured at its axially outer end at the tread edge (Te) and the width (WB) of the lateral groove (12) measured at its axially outer end (12e).

9. The motorcycle tire according to any one of claims 1-8, wherein arrangement pitches (P) in the tire circumferential direction of the lateral grooves (12) are 2.5 to 3.5 times the width (WA) of the lateral groove (12) measured at the axially inner end (12i).

10. The motorcycle tire according to any one of claims 1-9, wherein the tread portion (2) comprises a tread rubber, and the thickness of the tread rubber is maximum at the tread edges (Te).

11. The motorcycle tire according to any one of claims 1-10, wherein the tread portion (2) comprises a tread rubber, and the complex elastic modulus E* of the tread rubber is 1.0 to 10.0 MPa.

**Patentansprüche**

1. Motorradreifen (1), der einen Laufflächenabschnitt (2) umfasst, der mit zumindest einer Umfangsrille (10), die in einem Laufflächenkronenbereich (Cr) angeordnet ist und sich durchgehend in der Reifenumfangsrichtung erstreckt, und Querrillen (12), die sich von der zumindest einen Umfangsrille (10) zu den Laufflächenkanten (Te) erstrecken, versehen ist, wobei

die Breite einer jeden Querrille (12) derart ist, dass die Breite (WB) an dem axial äußeren Ende (12e), das an der Laufflächenkante (Te) angeordnet ist, größer ist als die Breite (WA) an dem axial inneren Ende (12i), das mit der Umfangsrille (10) verbunden ist.

2. Motorradreifen nach Anspruch 1, wobei die zumindest eine Umfangsrille (10) ein Paar der Umfangsrillen (10) ist, von denen jeweils eine auf jeder Seite des Reifenäquators (C) angeordnet ist, und dazwischen eine in Umfangsrichtung durchgehende zentrale Rippe (11) gebildet ist.

3. Motorradreifen nach Anspruch 1 oder 2, wobei das axial äußere Ende (12e) einer jeden Querrille (12) an einem Reifenseitenwandabschnitt (3), der sich von der Laufflächenkante (Te) radial einwärts erstreckt, geöffnet ist.

4. Motorradreifen nach einem der Ansprüche 1-3, wobei die Querrillen (12) die einzigen Rillen sind, die in dem Laufflächenabschnitt (2) angeordnet sind und sich in der axialen Richtung des Reifens erstrecken.

5. Motorradreifen nach einem der Ansprüche 1-4, wobei die zumindest eine Umfangsrille (10) und die Querrillen (12) sich gerade erstrecken.

6. Motorradreifen nach Anspruch 5, wobei die Querrillen (12) sich jeweils unter einem Winkel von nicht mehr als 5 Grad mit Bezug auf die axiale Richtung des Reifens erstrecken.

7. Motorradreifen nach einem der Ansprüche 1-6, wobei die Breite der Querrillen (12) von der zumindest einen Umfangsrille (10) zu den Laufflächenkanten (Te) hin allmählich zunimmt.

8. Motorradreifen nach einem der Ansprüche 1-7, wobei der Laufflächenabschnitt (2) axial lange Blöcke (13) umfasst, die jeweils zwischen in Umfangsrichtung benachbarten zweien der Querrillen (12) gebildet sind, und

die Blöcke (13) und die Querrillen (12) die folgende Bedingung (1) erfüllen,

$$1{,}0 < ShR < CrR < 3{,}0 \text{ --- (1)}$$

wobei

CrR das Verhältnis Wa/WA der Umfangsabmessung (Wa) des Blocks (13), an seinem axial inneren Ende gemessen, und der Breite (WA) der Querrille (12), an ihrem axial inneren Ende (12i) gemessen, ist, und ShR das Verhältnis Wb/WB der Umfangsabmessung (Wb) des Blocks (13), an seinem axial äußeren Ende an der Laufflächenkante (Te) gemessen, und der Breite (WB) der Querrille (12), an ihrem axial äußeren Ende (12e) gemessen, ist.

9. Motorradreifen nach einem der Ansprüche 1-8, wobei Anordnungsteilungsabstände (P) in der Umfangsrichtung des Reifens der Querrillen (12) das 2,5- bis 3,5-fache der Breite (WA) der Querrille (12), an dem axial inneren Ende (12i) gemessen, betragen.

10. Motorradreifen nach einem der Ansprüche 1-9, wobei der Laufflächenabschnitt (2) einen Laufflächenkautschuk umfasst, und die Dicke des Laufftächenkautschuks an den Laufflächenkanten (Te) maximal ist.

11. Motorradreifen nach einem der Ansprüche 1-10, wobei der Laufflächenabschnitt (2) einen Laufflächenkautschuk umfasst, und der komplexe Elastizitätsmodul E* des Laufflächenkautschuks 1,0 bis 10,0 MPa beträgt.


## Revendications

1. Pneumatique de motocyclette (1) comprenant une portion formant bande de roulement (2) dotée d'au moins une rainure circonférentielle (10) disposée dans une région de couronne (Cr) de la bande de roulement et s'étendant en continu dans la direction circonférentielle du pneumatique, et des rainures latérales (12) s'étendant depuis ladite au moins une rainure circonférentielle (10) vers les bordures de roulement (Te), dans lequel
la largeur de chacune desdites rainures latérales (12) est telle qu'une largeur (WB) à l'extrémité axialement extérieure (12e) positionnée au niveau de la bordure de roulement (Te) est plus grande qu'une largeur (WA) à l'extrémité axialement intérieure (12i) connectée à la rainure circonférentielle (10).

2. Pneumatique de motocyclette selon la revendication 1, dans lequel ladite au moins une rainure circonférentielle (10) est une paire de rainures circonférentielles (10) disposées de part et d'autre de l'équateur de pneumatique (C), et une nervure centrale circonférentiellement continue (11) est formée entre celles-ci.

3. Pneumatique de motocyclette selon la revendication 1 ou 2, dans lequel l'extrémité axialement extérieure (12e) de chacune desdites rainures latérales (12) est ouverte au niveau d'une portion de paroi latérale (3) du pneumatique, s'étendant radialement vers l'intérieur depuis la bordure de roulement (Te).

4. Pneumatique de motocyclette selon l'une quelconque des revendications 1 à 3, dans lequel les rainures latérales (12) sont les seules rainures disposées dans la portion formant bande de roulement (2) et s'étendant dans la direction axiale du pneumatique.

5. Pneumatique de motocyclette selon l'une quelconque des revendications 1 à 4, dans lequel ladite au moins une rainure circonférentielle (10) et les rainures latérales (12) s'étendent chacune en ligne droite.

6. Pneumatique de motocyclette selon la revendication 5, dans lequel les rainures latérales (12) s'étendent chacune sous un angle qui ne dépasse pas 5° par rapport à la direction axiale du pneumatique.

7. Pneumatique de motocyclette selon l'une quelconque des revendications 1 à 6, dans lequel la largeur des rainures latérales (12) augmente progressivement depuis ladite au moins une rainure circonférentielle (10) vers les bordures de roulement (Te).

8. Pneumatique de motocyclette selon l'une quelconque des revendications 1 à 7, dans lequel la portion formant bande de roulement (2) comprend des blocs axialement allongés (13) formés chacun entre deux des rainures latérales (12) circonférentiellement adjacentes, et

les blocs (13) et les rainures latérales (12) satisfont la condition suivante (1) :

$$1,0 < ShR < CrR < 3,0 \dots (1)$$

dans laquelle

CrR est le rapport Wa/WA d'une dimension circonférentielle (Wa) du bloc (13) mesurée à son extrémité axialement intérieure, et la largeur (WA) de la rainure latérale (12) mesurée à son extrémité axialement intérieure (12j), et
ShR est le rapport Wb/WB d'une dimension circonférentielle (Wb) du bloc (13) mesurée à son extrémité axialement extérieure au niveau de la bordure de roulement (Te) sur la largeur (WB) de la rainure latérale (12) mesurée à son extrémité axialement extérieure (12e).

9. Pneumatique de motocyclette selon l'une quelconque des revendications 1 à 8, dans lequel les pas d'agencement (P) dans la direction circonférentielle du pneumatique des rainures latérales (12) sont de 2,5 à 3,5 fois la largeur (WA) de la rainure latérale (12) mesurée à l'extrémité axialement intérieure (12i).

10. Pneumatique de motocyclette selon l'une quelconque des revendications 1 à 9, dans lequel la portion formant bande de roulement (2) comprend un caoutchouc de roulement, et l'épaisseur du caoutchouc de roulement est maximum au niveau des bordures de roulement (Te).

11. Pneumatique de motocyclette selon l'une quelconque des revendications 1 à 10, dans lequel la portion formant bande de roulement (2) comprend un caoutchouc de roulement, et le module d'élasticité complexe E*du caoutchouc de roulement est de 1,0 à 10,0 MPa.

FIG.1

# FIG.2

EP 3 028 874 B1

# FIG.3

EP 3 028 874 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008168703 A